# EUROPÄISCHE PATENTSCHRIFT

(11) **EP 1 637 908 B1**
(45) Veröffentlichungstag und Bekanntmachung des Hinweises auf die Patenterteilung: **14.06.2006**
(21) Anmeldenummer: 04022260.6
(22) Anmeldetag: 18.09.2004
(51) Int. Cl.: G02B 6/44

(54) **Laserlichtkabel mit elektrisch leitender Drahtumhüllung**
Cable for laser light comprising coiled electric wire conductors
Câble pour lumière laser avec des fils conducteurs électriques bobinés

(43) Veröffentlichungstag der Anmeldung: 22.03.2006
(73) Patentinhaber: TRUMPF Laser GmbH + Co. KG, 78713 Schramberg (DE)
(72) Erfinder: Armbruster, Bernd, 78733 Aichhalden (DE); Neuschaefer-Rube, Stephan, 78713 Schramberg (DE)
(74) Vertreter: Kohler Schmid Möbus

(56) Entgegenhaltungen:
- EP-A- 0 486 136
- EP-A- 0 516 931
- EP-A- 1 378 778
- US-A- 4 606 604

## Beschreibung

Die vorliegende Erfindung betrifft ein Laserlichtkabel mit einem Lichtwellenleiter und einer diesen umgebenden, ersten Drahtumhüllung, die in Längsrichtung des Laserlichtkabels elektrisch leitend ist, wobei die erste Drahtumhüllung eine den Lichtwellenleiter umgebende innere Metallumhüllung umgibt und dazwischen eine erste elektrische Isolierungsumhüllung vorgesehen ist und wobei die erste Drahtumhüllung von einer äußeren Metallumhüllung umgeben und dazwischen eine zweite elektrische Isolierungsumhüllung vorgesehen ist.

Ein derartiges Laserlichtkabel ist beispielsweise durch die EP-A-1 378 778 bekannt geworden.

Das aus EP-A-1 378 778 bekannte Laserlichtkabel weist zwischen einem inneren und einem äußeren Metallschutzschlauch eine Drahtumhüllung in Form eines metallischen Geflechtsschlauchs auf, der gegenüber den beiden Metallschutzschläuchen elektrisch isoliert ist. Der innere Metallschutzschlauch und der Geflechtsschlauch sind in einen elektrischen Sicherheitskreis zur Überwachung des Lichtwellenleiters eingebunden. Auf dem äußeren Metallschutzschlauch ist ein weiterer äußerer Geflechtsschlauch angeordnet, der einer Zug- und Druckbelastung des äußeren Metallschutzschlauchs entgegenwirkt. Der innere Metallschutzschlauch und der äußere Geflechtsschlauch sind in einen weiteren elektrischen Sicherheitskreis eingebunden. Im Schadensfall kann, beim Versagen beider Sicherheitskreise, aus dem Lichtwellenleiter austretende Laserstrahlung durch die als Metallwendel ausgebildeten Metallschutzschläuche und die Geflechtsschläuche hindurch nach außen dringen. Außerdem ist die Herstellung des Geflechtsschlauchs relativ aufwändig.

Aus der US-A-4 606 604 ist weiterhin ein Lichtkabel mit einem den Lichtwellenleiter umgebenden elektrisch leitenden Rohr bekannt, wobei das Rohr von einer inneren und einer äußeren Drahtumhüllung umgeben ist, die zur mechanischen Entlastung des elektrisch leitenden Rohrs dienen.

Demgegenüber ist es die Aufgabe der vorliegenden Erfindung, ein Laserlichtkabel der eingangs genannten Art dahingehend weiterzubilden, dass die Drahtumhüllung einfacher hergestellt und lichtdicht ausgeführt werden kann.

Diese Aufgabe wird erfindungsgemäß dadurch gelöst, dass die erste Drahtumhüllung durch Wicklung eines einzelnen Drahts oder eines aus parallelen Drähten bestehenden Drahtbandes gebildet ist, dessen axial benachbarte Drahtwindungen lichtdicht aneinander anliegen. Zumindest einige Drähte des Drahtbandes sind dabei elektrisch leitend, die übrigen Drähte können beispielsweise aus einem hochschmelzenden Kunststoff bestehen.

Bei der erfindungsgemäßen Drahtumhüllung können axial benachbarte Drahtwindungen aneinander anliegend, d.h. ohne Zwischenraum, gefertigt werden, so dass die erfindungsgemäße Drahtumhüllung im Gegensatz zu einem Geflecht vollständig lichtdicht ausgeführt werden kann und eine Abschirmung der im Schadensfall aus dem Lichtwellenleiter austretenden Laserstrahlung erreicht wird. Für die optische Abschirmwirkung ist es vorteilhaft, wenn die Drahtwicklung vollständig metallisch ausgebildet ist.

Besonders bevorzugt weist die erste Drahtumhüllung zwei Wicklungslagen mit gegenläufiger Wicklungsrichtung auf, wodurch die lichtdichte Abschirmung des Laserlichtkabels weiter verbessert wird.

Weiterhin bevorzugt ist die erste Drahtumhüllung von einer in Längsrichtung des Laserlichtkabels elektrisch leitenden zweiten Drahtumhüllung umgeben, die ebenfalls durch Wicklung eines einzelnen Drahts oder eines aus parallelen Drähten bestehenden Drahtbandes gebildet ist. Vorteilhafterweise sind die beiden Drahtumhüllungen gegeneinander isoliert und jeweils in elektrische Sicherheitsschaltkreise eingebunden, durch die eine Beschädigung des Lichtwellenleiters und/oder einer einzelnen Komponente des Laserlichtkabels ermittelbar ist.

Weitere vorteilhafte Ausgestaltungen der Erfindung sind Gegenstand der Unteransprüche.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein erstes Ausführungsbeispiel des erfindungsgemäßen Laserlichtkabels;
- Fig. 2a-2c: verschiedene Varianten eines zweiten Ausführungsbeispiels des erfindungsgemäßen Laserlichtkabels;
- Fig. 3: eine Detailansicht einer Drahtumhüllung, die aus einem einzelnen Draht (Fig. 3a) oder aus einem Drahtband (Fig. 3b) gewickelt ist, gemäß III in Fign. 1 und 2; und
- Fig. 4: zwei Wickellagen einer Drahtumhüllung in einer Detailansicht analog zu Fig. 3.

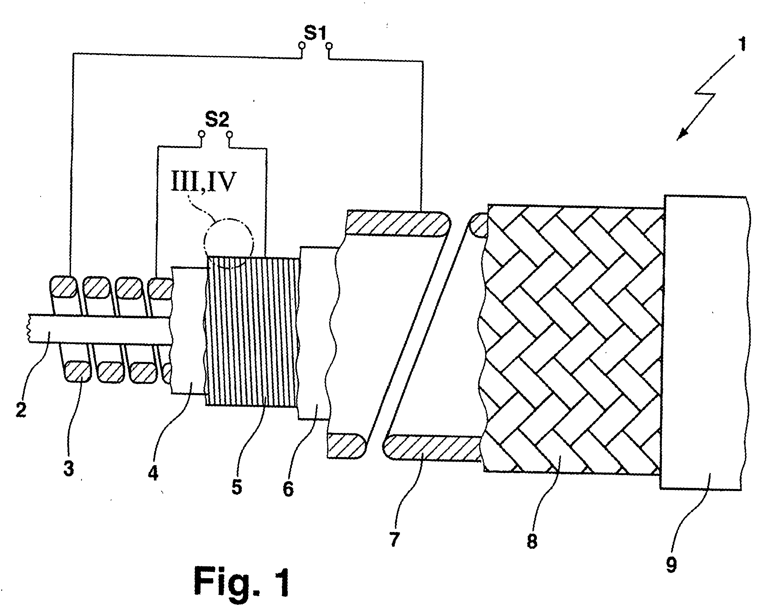

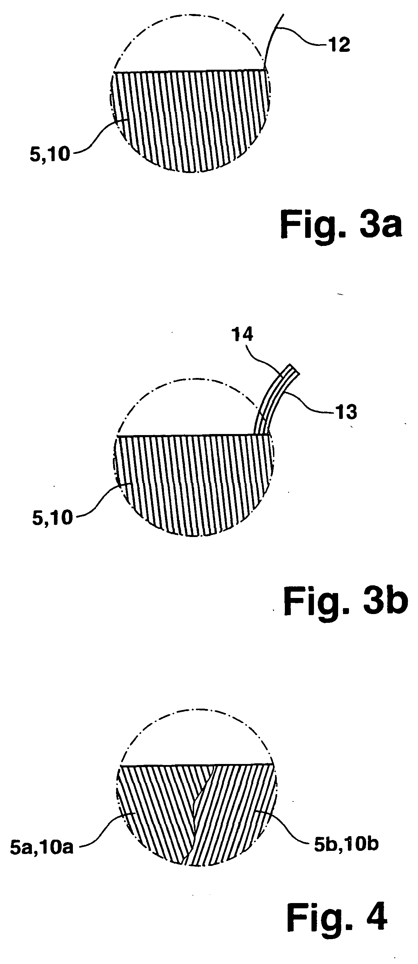

Das in **Fig. 1** gezeigte Laserlichtkabel **1** ist von innen nach außen wie folgt aufgebaut:
- ein Lichtwellenleiter **2**;
- eine innere Metallumhüllung **3** in Form einer Metallwendel;
- eine elektrisch nicht leitende Isolierumhüllung **4** aus z.B. Kunststoff (PVC);
- eine in Längsrichtung des Laserlichtkabels elektrisch leitende metallische Drahtumhüllung **5,** deren Aufbau unten mit Bezug auf Fig. 3 beschrieben ist;
- eine elektrisch nicht leitende Isolierumhüllung **6** aus z.B. Kunststoff (PVC);
- eine äußere Metallumhüllung **7** in Form einer Flachband-Metallwendel;
- ein Geflechtsschlauch **8;** und
- ein Außenmantel **9** aus Kunststoff.

Die innere Metallumhüllung 3 und die äußere Metallumhüllung 7 sind in einen Ruhestromkreis (Sicherheitskreis **S1**) eingebunden. Wird infolge eines Schadens am Lichtwellenleiter 2 oder durch äußere Einflüsse die innere Metallumhüllung 3 zerstört, so wird der Stromfluss unterbrochen, und der Laser schaltet ab. Zwischen innerer Metallumhüllung 3 und Drahtumhüllung 5 wird zur Überwachung des Lichtwellenleiters 2 der Durchgangswiderstand durch die Isolierumhüllung 4 gemessen (Sicherheitskreis **S2).** Wird infolge eines Schadens am Lichtwellenleiter 2 die innere Metallumhüllung 3 und damit auch die Isolierumhüllung 4 heiß, so sinkt dieser Widerstand. Bei Unterschreitung eines Grenzwertes wird der Laser abgeschaltet. Außerdem kann die Kapazität zwischen innerer Metallumhüllung 3 und Drahtumhüllung 5 kontinuierlich überwacht werden.

Die äußere Metallumhüllung 7 mit ihrem umflochtenen Geflechtsschlauch 8 und der umspritzte Außenmantel 9 dienen weiterhin zum mechanischen Schutz des Lichtwellenleiters 2 und zur Biegeradiusbegrenzung des Laserlichtkabels 1. Das Flachband der äußeren Metallumhüllung 7 besteht aus Edelstahl, der Geflechtsschlauch 8 ist mit Vorspannung auf die Flachbandwendel geflochten. Bei Zugbelastung des Laserlichtkabels **1** verhindert das Flachband eine Kontraktion des Geflechtsschlauchs 8 und stellt eine ausreichende Steifigkeit sicher. Bei Biegung des Laserlichtkabels 1 verhindert der Geflechtsschlauch 8, dass sich die Windungen des Flachbandes überlappen können. Hierdurch kann ein bestimmter Biegeradius nicht unterschritten werden.

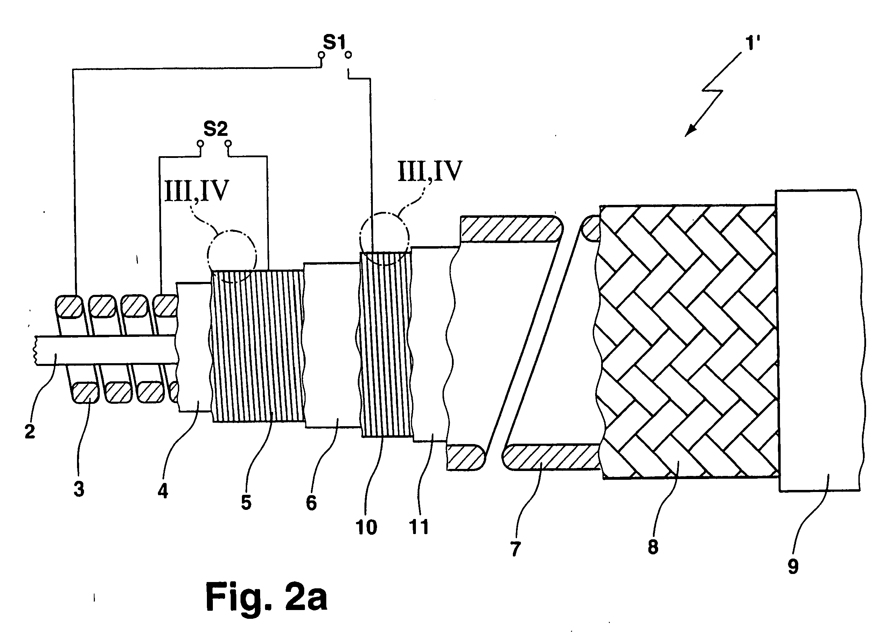

Von diesem Laserlichtkabel 1 unterscheidet sich das in **Fig. 2a** gezeigte Laserlichtkabel **1'** durch eine zusätzliche (äußere, in Längsrichtung des Laserlichtkabels elektrisch leitende ) Drahtumhüllung **10,** die zwischen der (inneren) Drahtumhüllung 5 und der äußeren Metallumhüllung 7 angeordnet und durch die lsolierumhüllungen 6, **11** elektrisch isoliert ist. In diesem Fall ist der Sicherheitskreis S1 zwischen innerer Metallumhüllung 3 und äußerer Drahtumhüllung 10 geschaltet. Da der Geflechtsschlauch 8 nicht in diesen Sicherheitskreis eingebunden ist, können der Geflechtsschlauch 8 und die äußere Metallumhüllung 7 als elektrische Abschirmung nach außen für die innere Metallumhüllung 3 und die Drahtumhüllungen 5, 10 genutzt werden. Dies vermindert die Störanfälligkeit der elektrischen Sicherheitskreise.

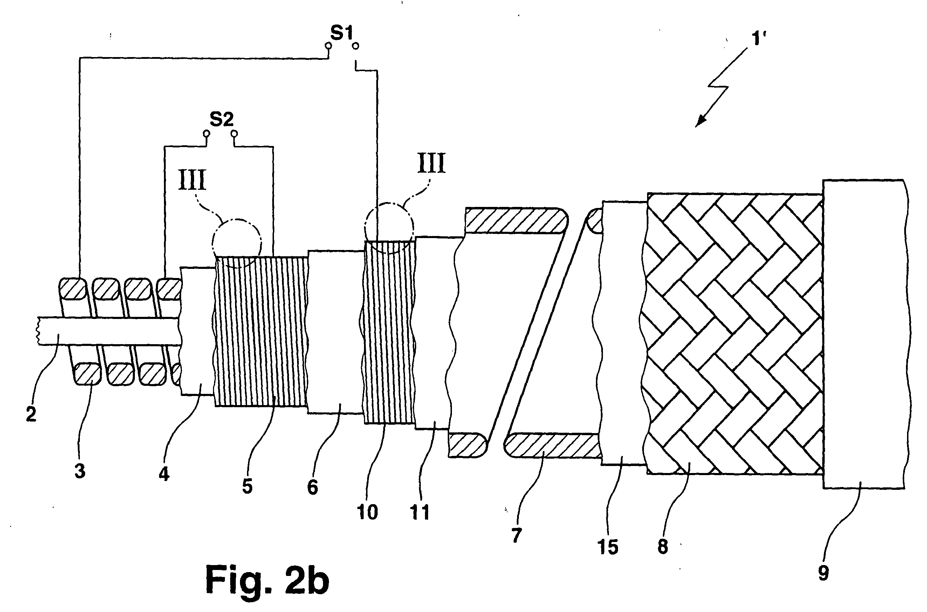

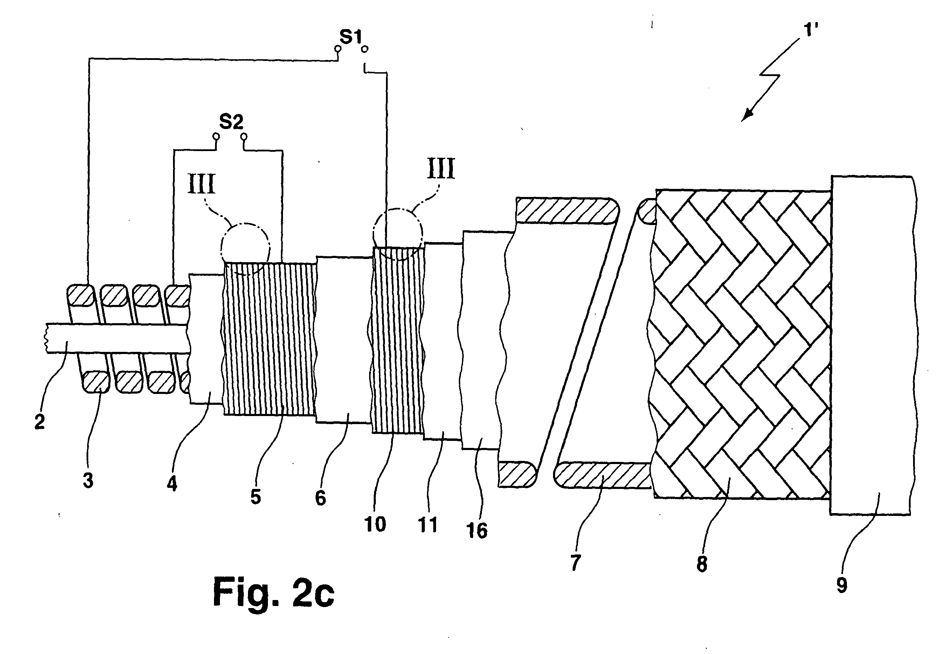

Für eine Verbesserung der elektrischen Abschirmung nach außen kann benachbart zur äußeren Metallumhüllung 7 noch eine weitere Metallumhüllung **15, 16** angeordnet sein, die entsprechend **Fig. 2b** außen, d.h. zwischen äußerer Metallumhüllung 7 und Geflechtsschlauch 8, oder entsprechend Fig. 2c innen, d.h. zwischen Isolierumhüllung 11 und äußerer Metallumhüllung 7 gezeigt ist. Diese weitere Metallumhüllung 15, 16 ist lückenlos ausgebildet, aber trotzdem biegsam gestaltet. Sie kann gegenüber benachbarten metallischen Schichten durch Isolierumhüllungen isoliert sein.

Fign. 3a und 3b zeigen verschiedene Ausführungsformen der Drahtumhüllungen 5, 10. In **Fig. 3a** ist die Drahtumhüllung 5, 10 durch Wicklung eines einzelnen Drahts **12** (z.B. aus Kupfer) und in **Fig. 3b** durch Wicklung eines aus parallelen Drähten **14** bestehenden Drahtbandes 13 gebildet. Der Draht 12 und das Drahtband 13 sind so auf die Isolierumhüllung 4 bzw. 6 gewickelt, dass sich eine durchgehende Schicht aus aneinander liegenden Drahtwindungen ergibt.

Wie **Fig. 4** zeigt, weist vorzugsweise jede Drahtumhüllung 5, 10 zwei übereinander liegende Wicklungen 5a, 5b bzw. 10a, 10b mit unterschiedlicher Wickelrichtung auf. Im Vergleich zu einem Drahtgeflecht kann diese Drahtumwicklung vollständig lichtdicht ausgeführt werden und bildet somit eine Abschirmung, die im Schadensfall den Austritt von Laserstrahlung aus dem Laserlichtkabel verhindert.

## Patentansprüche

1. Laserlichtkabel (1; 1') mit einem Lichtwellenleiter (2) und einer diesen umgebenden, ersten Drahtumhüllung (5), die in Längsrichtung des Laserlichtkabels (1, 1') elektrisch leitend ist, wobei die erste Drahtumhüllung (5) eine den Lichtwellenleiter (2) umgebende innere Metallumhüllung (3) umgibt und dazwischen eine erste elektrische Isolierungsumhüllung (4) vorgesehen ist und wobei die erste Drahtumhüllung (5) von einer äußeren Metallumhüllung (7) umgeben und dazwischen eine zweite elektrische Isolierungsumhüllung (6) vorgesehen ist,
**dadurch gekennzeichnet,**
**dass** die erste Drahtumhüllung (5) durch Wicklung eines einzelnen Drahts (12) oder eines aus parallelen Drähten (14) bestehenden Drahtbandes (13) gebildet ist, dessen axial benachbarte Drahtwindungen lichtdicht aneinander anliegen.

2. Laserlichtkabel nach Anspruch 1, **dadurch gekennzeichnet, dass** die erste Drahtumhüllung (5) von einer in Längsrichtung des Laserlichtkabels elektrisch leitenden zweiten Drahtumhüllung (10) umgeben ist, die durch Wicklung eines einzelnen Drahts (12) oder eines aus parallelen Drähten (14) bestehenden Drahtbandes (13) gebildet und gegen die erste Drahtumhüllung (5) isoliert ist.

3. Laserlichtkabel nach Anspruch 2, **dadurch gekennzeichnet, dass** axial benachbarte Drahtwindungen der zweiten Drahtumhüllung (10) lichtdicht aneinander anliegen.

4. Laserlichtkabel nach einem der vorhergehenden Ansprüche, **dadurch gekennzeichnet, dass** der einzelne Draht (12) bzw. einzelne oder alle Drähte (14) des Drahtbandes (13) der ersten bzw. jeder Drahtumhüllung (5, 10) aus Metall, insbesondere aus Kupfer oder aus verkupfertem Stahl bestehen.

5. Laserlichtkabel nach einem der vorhergehenden Ansprüche, **dadurch gekennzeichnet, dass** die erste bzw. jede Drahtumhüllung (5, 10) zwei Wicklungslagen (5a, 5b; 10a, 10b) mit gegenläufiger Wicklungsrichtung aufweist.

6. Laserlichtkabel nach einem der vorhergehenden Ansprüche, **dadurch gekennzeichnet, dass** zwischen innerer Metallumhüllung (3) und der ersten Drahtumhüllung (5) ein elektrischer Sicherheitsschaltkreis (S2) geschaltet ist, durch den eine Änderung des Durchgangswiderstandes durch die erste Isolierungsumhüllung (4) ermittelbar ist.

7. Laserlichtkabel nach einem der vorhergehenden Ansprüche, **dadurch gekennzeichnet, dass** zwischen innerer Metallumhüllung (3) und der zweiten Drahtumhüllung (10) oder der äußeren Metallumhüllung (7) ein elektrischer Sicherheitsschaltkreis (S1) geschaltet ist, durch den eine Beschädigung der inneren Metallumhüllung (3) ermittelbar ist.

8. Laserlichtkabel nach Anspruch 6 oder 7, **dadurch gekennzeichnet, dass** benachbart zur äußeren Metallumhüllung (7) eine weitere, lückenlose Metallumhüllung (15, 16) angeordnet ist, die den bzw. die elektrischen Sicherheitsschaltkreise (S1, S2) nach außen elektrisch abschirmt und insbesondere gegen die äußere Metallumhüllung (7) elektrisch isoliert ist.

## Claims

1. Laser light cable (1; 1') comprising an optical waveguide (2) and, surrounding the latter, a first wire sheath (5) which is electrically conductive in the longitudinal direction of the laser light cable (1; 1'), the first wire sheath (5) surrounding an inner metal sheath (3) which surrounds the optical waveguide (2), and a first electrical insulation sheath (4) being provided therebetween, and the first wire sheath (5) being surrounded by an outer metal sheath (7), and a second electrical insulation sheath (6) being provided therebetween,
**characterised in**
**that** the first wire sheath (5) is formed by winding a single wire (12) or a wire band (13) consisting of parallel wires (14), the axially adjacent turns of which rest against one another in a light-tight manner.

2. Laser light cable according to claim 1, **characterised in that** the first wire sheath (5) is surrounded by a second wire sheath (10) which is electrically conductive in the longitudinal direction of the laser light cable and which is formed by winding a single wire (12) or a wire band (13) consisting of parallel wires (14) and is insulated from the first wire sheath (5).

3. Laser light cable according to claim 2, **characterised in that** axially adjacent turns of the second wire sheath (10) rest against one another in a light-tight manner.

4. Laser light cable according to any one of the preceding claims, **characterised in that** the single wire (12) and individual or all wires (14) of the wire band (13) of the first or each wire sheath (5, 10) consist of metal, especially copper or copper-plated steel.

5. Laser light cable according to any one of the preceding claims, **characterised in that** the first or each wire sheath (5, 10) has two layers of windings (5a, 5b; 10a, 10b) of opposite winding direction.

6. Laser light cable according to any one of the preceding claims, **characterised in that**, between the inner metal sheath (3) and the first wire sheath (5), an electrical safety circuit (S2) is connected by means of which a change in the volume resistance through the first insulation sheath (4) can be determined.

7. Laser light cable according to any one of the preceding claims, **characterised in that**, between the inner metal sheath (3) and the second wire sheath (10) or the outer metal sheath (7), an electrical safety circuit (S1) is connected, by means of which damage to the inner metal sheath (3) can be determined.

8. Laser light cable according to claim 6 or claim 7, **characterised in that** there is arranged adjacent to the outer metal sheath (7) a further, continuous metal sheath (15, 16) which electrically shields the electrical safety circuit(s) (S1, S2) towards the outside and, especially, electrically insulates it (them) from the outer metal sheath (7).

## Revendications

1. Câble pour lumière laser (1 ; 1') avec une fibre optique (2) et une première gaine en fil (5) entourant celle-ci qui est électroconductrice en direction longitudinale du câble pour lumière laser (1 ; 1'), dans lequel câble la première gaine en fil (5) entoure une gaine métallique intérieure (3) entourant la fibre optique (2) et une première gaine d'isolation électrique (4) est prévue entre les deux et dans lequel câble la première gaine en fil (5) est entourée par une gaine métallique extérieure (7) et une deuxième gaine d'isolation électrique (6) est prévue entre les deux,
**caractérisé par le fait**
**que** la première gaine en fil (5) est formée par enroulement d'un fil individuel (12) ou d'un ruban de fil (13) composé de fils parallèles (14) dont les spires de fil axialement voisines sont juxtaposées de manière étanche à la lumière.

2. Câble pour lumière laser selon la revendication 1, **caractérisé par le fait que** la première gaine en fil (5) est entourée par une deuxième gaine en fil (10) électroconductrice en direction longitudinale du câble pour lumière laser qui est formée par enroulement d'un fil individuel (12) ou d'un ruban de fil (13) composé de fils parallèles (14) et isolée par rapport à la première gaine en fil (5).

3. Câble pour lumière laser selon la revendication 2, **caractérisé par le fait que** les spires de fils axialement voisines de la deuxième gaine en fil (10) sont juxtaposées de manière étanche à la lumière.

4. Câble pour lumière laser selon l'une des revendications précédentes, **caractérisé par le fait que** le fil individuel (12) ou des fils individuels ou tous les fils (14) du ruban de fil (13) de la première ou de chaque gaine en fil (5, 10) sont en métal, en particulier en cuivre ou en acier cuivré.

5. Câble pour lumière laser selon l'une des revendications précédentes, **caractérisé par le fait que** la première ou chaque gaine en fil (5, 10) présente deux couches d'enroulement (5a, 5b ; 10a, 10b) de sens d'enroulement contraires.

6. Câble pour lumière laser selon l'une des revendications précédentes, **caractérisé par le fait qu'**un circuit électrique de sécurité (S2) est relié entre la gaine métallique intérieure (3) et la première gaine en fil (5), lequel permet de détecter une modification de la résistance de passage à travers la première gaine d'isolation (4).

7. Câble pour lumière laser selon l'une des revendications précédentes, **caractérisé par le fait qu'**un circuit électrique de sécurité (S1) est relié entre la gaine métallique intérieure (3) et la deuxième gaine en fil (10) ou la gaine métallique extérieure (7), lequel permet de détecter une détérioration de la gaine métallique intérieure (3).

8. Câble pour lumière laser selon la revendication 6 ou 7, **caractérisé par le fait qu'**une autre gaine métallique continue (15, 16) est adjacente à la gaine métallique extérieure (7), laquelle blinde électriquement le ou les circuits électriques de sécurité (S1, S2) vers l'extérieur et est en particulier électriquement isolée par rapport à la gaine métallique extérieure (7).
